# EUROPÄISCHE PATENTANMELDUNG

(11) **EP 1 649 912 A2**
(43) Veröffentlichungstag der Anmeldung: **26.04.2006**
(21) Anmeldenummer: 05016033.2
(22) Anmeldetag: 23.07.2005
(51) Int. Cl.: B01D 29/05, B01D 17/02

(54) **Vorrichtung zum Abscheiden von Beimengungen von Flüssigkeiten sowie Reinigungsvorrichtung**

(30) Priorität: 19.10.2004 DE 102004050741
(71) Anmelder: B+V Industrietechnik GmbH, 20457 Hamburg (DE)
(72) Erfinder: Drohula, Knud, 22045 Hamburg (DE); Behnke, Carsten, 22607 Hamburg (DE); Fischer, Frank, 22869 Schenefeld (DE)
(74) Vertreter: Klickow, Hans-Henning

(57) **Zusammenfassung**

Die Vorrichtung dient zum Abscheiden von Beimengungen aus Flüssigkeiten und ist zur Verwendung in einem Trennbehälter zum Abscheiden von Beimengungen aus einem Beimengungs-Flüssigkeits-Gemisch vorgesehen. Die Vorrichtung weist im wesentlichen eine plattenartige Gestaltung auf. Die plattenartige Gestaltung wird durch mindestens zwei aufeinander angeordnete Platten bereitgestellt. Die Platten sind von einem stangenartigen Träger gehaltert. Zur Reinigung des plattenförmigen Elementes ist eine Reinigungsvorrichtung vorgesehen, die einen dreiteiligen Aufbau aus einer wannenförmigen Aufnahmeeinheit, einer Reinigungseinheit sowie einer deckelartigen Ablageeinheit aufweist.

## Beschreibung

Die Erfindung betrifft eine Vorrichtung zum Abscheiden von Beimengungen aus Flüssigkeiten, zur Verwendung in einem Trennbehälter zum Abscheiden der Beimengungen aus einem Beimengungs-Flüssigkeits-Gemisch, die eine plattenartige Gestaltung aufweist.

Die Erfindung betrifft darüber hinaus eine Reinigungsvorrichtung zur Reinigung von plattenförmigen Trennelementen, die im Bereich von Separatoren zum Abscheiden von Beimengungen aus einem Beimengungs-Flüssigkeits-Gemisch vorgesehen sind.

Derartige Separationsvorrichtungen dienen zur Abscheidung von Flüssigkeiten oder Feststoffen aus einer Trägerflüssigkeit. Insbesondere ist es möglich, eine Separation von Öl und Wasser vorzunehmen und hierdurch ölartige Verunreinigungen aus dem Wasser abzuscheiden.

Typischerweise werden sogenannte Ölseparatoren zweistufig aufgebaut und eine Abscheidung des Öls erfolgt sowohl unter Ausnutzung der Schwerkraft aufgrund von unterschiedlichen spezifischen Gewichten der voneinander zu trennenden Substanzen als auch unter Verwendung von Trennelementen, die eine Zusammenführung von kleinen und kleinsten Verunreinigungsteilchen zu größeren Teilchen unterstützen, die einfacher als sehr kleine Teile abzuscheiden sind. Insbesondere dienen die Trennelemente dazu, feinstverteilte emulgierte Öltröpfchen zu größeren Öltropfen zusammenzuführen, die im Wasser aufsteigen. Darüber hinaus wirken die Trennelemente filterartig und halten fein verteilte Feststoffe zurück, die sich nicht ohne weiteres aufgrund der Schwerkrafteinwirkung absetzen.

Im Bereich einer ersten Trennstufe der Ölseparatoren wird in der Regel ein quer zur Strömungsrichtung angeordnetes plattenförmiges Abscheidungselement positioniert, das mit feinen Durchgangskanälen versehen bzw. aus einem durchlaßfähigen Schaum ausgebildet ist. Dieses Trennelement stellt die Funktionen der Herausfilterung von fein verteilten Verunreinigung sowie der Zusammenführung von kleinen Öltröpfchen bereit. Bei einem Betrieb des Ölseparators ist es erforderlich, die Trennelemente nach einer bestimmten Betriebsdauer zu reinigen, wobei die Dauer der jeweiligen Verwendungs- und Reinigungszyklen von den konkret vorliegenden Anwendungsbedingungen und insbesondere von der Menge der abzuscheidenden verunreinigungen abhängig ist.

Aufgrund der üblichen Dimensionierung von Ölseparatoren konnte bislang sowohl die Funktionalität als auch die Handhabbarkeit der Trennelemente noch nicht derart optimiert werden, daß unter zusätzlicher Berücksichtigung wirtschaftlicher Randbedingungen eine Optimierung innerhalb des gegebenen Anforderungsspektrums erreicht ist.

Aufgabe der vorliegenden Erfindung ist es, eine Vorrichtung der einleitend genannten Art derart zu konstruieren, daß eine hohe Funktionalität bei gleichzeitig einfacher Handhabbarkeit gewährleistet wird.

Diese Aufgabe wird erfindungsgemäß dadurch gelöst, daß die plattenartige Gestaltung durch mindestens zwei aufeinander angeordnete Platten ausgebildet ist und daß die Platten von einem stangenartigen Träger gehaltert sind.

Weitere Aufgabe der vorliegenden Erfindung ist es, eine Reinigungsvorrichtung der einleitend genannten Art derart zu konstruieren, daß die Durchführung von Reinigungsvorgängen erleichtert wird.

Diese Aufgabe wird erfindungsgemäß dadurch gelöst, daß ein dreiteiliger Aufbau aus einer wannenförmigen Aufnahmeeinheit, einer Reinigungseinheit und einer deckelartigen Ablageeinheit vorliegt.

Durch die plattenartige Gestaltung des Trennelementes mit einem gemeinsamen stangenartigen Träger wird zum einen eine hohe technische Wirksamkeit als auch eine einfache Handhabbarkeit unterstützt. Unter Verwendung des stangenartigen Trägers kann das Trennelement in den jeweiligen Ölseparator eingesetzt und auch wieder aus diesem entnommen werden. Insbesondere wird eine Handhabung mit Hilfe von Hubeinrichtungen, beispielsweise mit kleinen Kränen, unterstützt.

Die dreiteilige Ausbildung der Reinigungsvorrichtung ermöglicht zum einen eine Verstauung der Reinigungseinheit in einem unbenutzten Zustand kompakt und mit geringem Platzbedarf, darüber hinaus werden verschmutzungen einer Umgebung des Ölseparators bei einem Herausnehmen des Trennelementes aus dem Ölseparator weitgehend vermieden.

Eine Anpaßbarkeit an unterschiedliche Anwendungsanforderungen wird dadurch erleichtert, daß im Bereich des Trägers mindestens drei Platten angeordnet sind.

Zur Unterstützung einer Zusammenführung von kleinen Öltröpfchen erweist es sich als vorteilhaft, daß mindestens eine der Platten eine makroporöse Struktur aufweist.

Eine kompakte Anordnung wird dadurch unterstützt, daß die Platten als im wesentlichen kreisförmige Scheiben ausgebildet sind.

Eine Handhabung mit Hilfe von Hubvorrichtungen wird dadurch erleichtert, daß der Träger zentrisch im Bereich der Platten angeordnet ist.

Zur Unterstützung einer leichten Ausführungsform wird vorgeschlagen, daß der Träger rohrförmig ausgebildet ist.

Eine Handhabung des Trennelementes unter Verwendung von Hubvorrichtungen wird dadurch unterstützt, daß der Träger mit mindestens einer Handhabungsöffnung versehen ist.

Zur Erleichterung einer Handhabung von weichen und mechanisch wenig stabilen Platten wird vorgeschlagen, daß die Platten von mindestens einem Halteblech abgestützt sind, das am Träger befestigt ist.

Eine besonders kompakte Ausführungsform der Reinigungsvorrichtung wird dadurch unterstützt, daß eine Seitenwandung der deckelförmigen Ablageeinheit einen größeren Innendurchmesser aufweist, als ein Außendurchmesser einer Seitenwandung der wannenförmigen Aufnahmeeinheit beträgt.

Ebenfalls trägt es zu einer kompakten Verstauung in einem unbenutzten Zustand sowie zu einer vermeidung von Verschmutzungen bei, daß die Reinigungseinheit in der Aufnahmeeinheit anordbar ist.

Eine weitere Verbesserung der kompakten Gestaltung kann dadurch erreicht werden, daß eine in der Aufnahmeeinheit angeordnete Reinigungseinheit von der deckelförmigen Ablageeinheit abdeckbar ist.

Eine hohe Handhabungssicherheit wird dadurch unterstützt, daß die Aufnahmeeinheit auf einem Deckel des Separators anordbar ausgebildet ist.

Eine bevorzugte Anwendung besteht darin, daß der Trennbehälter zur Abscheidung von Öl aus Wasser ausgebildet ist.

In den Zeichnungen sind Ausführungsbeispiele der Erfindung schematisch dargestellt. Es zeigen:
- Fig. 1: eine schematische Seitenansicht einer zweistufigen Abscheidevorrichtung,
- Fig. 2: einen Vertikalschnitt durch ein mehrlagiges Trennelement mit zentral angeordnetem Träger und
- Fig. 3: eine schematische Darstellung einer oberhalb eines Ölseparators angeordneten Reinigungsvorrichtung.

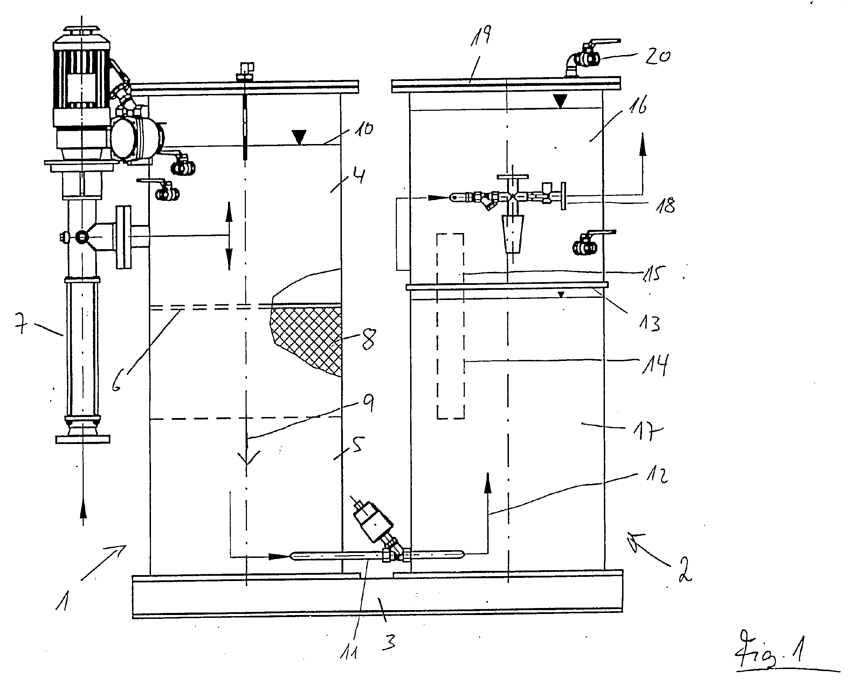

Fig. 1 zeigt eine schematische und teilweise geschnittene Seitenansicht einer Vorrichtung zur Abscheidung von Beimengungen aus Flüssigkeiten, insbesondere zur Abscheidung von Öl aus Wasser. Die Vorrichtung weist eine erste Trennstufe (1) sowie eine zweite Trennstufe (2) auf. Die Trennstufen (1, 2) sind von einem gemeinsamen Sockel (3) gehaltert. Die erste Trennstufe (1) weist eine obere Trennkammer (4) sowie eine untere Trennkammer (5) auf, die von einer siebartigen Unterteilung (6) gegeneinander abgegrenzt sind. In die obere Trennkammer (4) mündet eine Zuführung (7) ein. Unterhalb der Unterteilung (6) ist in der unteren Trennkammer (5) ein Abscheider (8) angeordnet, der typischerweise aus einem schaumartigen oder porösen Material ausgebildet wird. Eine Hauptströmungsrichtung (9) in der ersten Trennstufe (1) ist in vertikaler Richtung von oben nach unten orientiert.

In der oberen Trennkammer (4) der ersten Trennstufe (1) scheidet sich aufgrund der Schwerkrafteinwirkung im Bereich einer Flüssigkeitsoberfläche (10) das spezifisch leichtere Öl auf der restlichen Flüssigkeit ab. Aus der ersten Trennstufe (1) herausströmende Flüssigkeit wird über eine Verbindungsleitung (11) der zweiten Trennstufe (2) zugeführt. In der zweiten Trennstufe (2) ist eine Hauptströmungsrichtung (12) in lotrechter Richtung von unten nach oben orientiert. Die zweite Trennstufe (2) ist von einer Trennwand (13) unterteilt, die sich im wesentlichen in horizontaler Richtung erstreckt. Im Bereich der Trennwand (13) werden ein erstes Trennelement (14) und ein zweites Trennelement (15) gehaltert. Durch die Trennwand (13) wird die zweite Trennstufe (2) in eine obere Trennkammer (16) und eine untere Trennkammer (17) unterteilt. An die obere Trennkammer (16) ist eine Ableitung (18) für gereinigte Flüssigkeit angeschlossen. Im Bereich eines Deckels (19) der zweiten Trennstufe (2) ist ein Ablaß (20) für abgeschiedenes Öl angeordnet.

Fig. 2 zeigt ein Trennelement (21) mit plattenartigem Aufbau, das im Bereich der ersten Trennstufe (1) als Abscheider (8) verwendet werden kann. Das Trennelement (21) besteht bei der in Fig. 2 dargestellten Ausführungsform aus drei übereinander angeordneten Platten (22), die von einem stangenartigen Träger (23) gehaltert sind. Die Platten (22) sind im wesentlichen als kreisförmige Scheiben mit einer zentralen Ausnehmung ausgebildet. In die zentrale Ausnehmung ist der Träger (23) eingeführt. Der Träger (23) kann rohrförmig gestaltet sein und ist mit mindestens einer Handhabungsöffnung (24) versehen. Vorzugsweise werden zwei Handhabungsöffnungen (24) verwendet, um eine Verbindung mit einem Hubgerät, beispielsweise einem Kran, zu unterstützen.

Die Platten (22) weisen eine makroporöse Struktur auf. Die Dicke der Platten (22) wird vorzugsweise relativ zueinander unterschiedlich gewählt und an die jeweiligen Anwendungsanforderungen angepaßt.

Zur Bereitstellung einer guten mechanischen Stabilität sind die Platten (22) zwischen zwei Haltebleche (25, 26) eingelegt, die eine perforierte Struktur aufweisen. Insbesondere ist daran gedacht, wenigstens das in lotrechter Richtung untere Halteblech (25) starr mit dem Träger (23) zu verbinden. Die Platten (22) können hierdurch lose auf den Träger (23) aufgeschoben werden und benötigen somit nur eine relativ geringe mechanische Eigenstabilität.

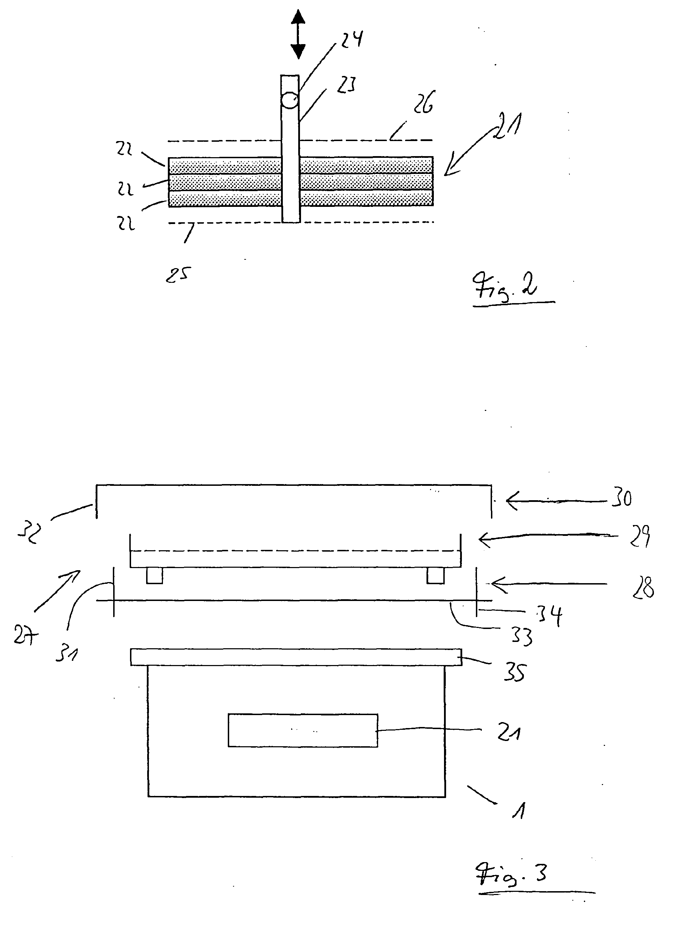

Fig. 3 zeigt eine Reinigungsvorrichtung (27) für den Abscheider (8) bzw. das Trennelement (21). Die Reinigungsvorrichtung ist dreiteilig ausgebildet und besteht aus einer wannenförmigen Aufnahmeeinheit (28), einer Reinigungseinheit (29) sowie einer deckelartigen Ablage (30). Die Reinigungseinheit (29) weist einen Außendurchmesser derart auf, daß sie in einem unbenutzten Zustand von der Aufnahmeeinheit (28) aufnehmbar ist. Eine Seitenwandung (31) der Aufnahmeeinheit (28) weist ein Innendurchmesser auf, der größer als ein Außendurchmesser einer Seitenwandung (32) der Ablageeinheit (30) ausgebildet ist. Die deckelartige Ablageeinheit (30) kann hierdurch auf die Aufnahmeeinheit (28) aufgesetzt werden. Die Aufnahmeeinheit (28) ist darüber hinaus im Bereich einer Unterseite eines Bodens (33) mit einem Einfassungssteg (34) versehen, dessen Innendurchmesser an einen Außendurchmesser eines Deckels (35) der ersten Trennstufe (1) angepaßt ausgebildet ist. Die Aufnahmeeinheit (28) kann hierdurch mechanisch stabil auf den Deckel (35) aufgesetzt werden.

Zur Unterstützung einer kompakten Verstauung ist es möglich, die Reinigungsvorrichtung (27) in einem unbenutzten Zustand oberhalb des Deckels (35) zu positionieren. In die Aufnahmeeinheit (28) ist hierbei die Reinigungseinheit (29) hineingestellt und es erfolgt eine Abdeckung mittels der deckelförmigen Ablageeinheit (30).

Zur Durchführung eines Reinigungsvorganges wird zunächst die Reinigungsvorrichtung (27) neben die erste Trennstufe (1) gestellt und die Ablageeinheit (30) wird abgenommen und im Bereich eines Reinigungsplatzes positioniert. Anschließend wird die Reinigungseinheit (29) aus der Aufnahmeeinheit (28) herausgenommen und ebenfalls im Bereich des Reinigungsplatzes positioniert.

In einem nächsten Schritt erfolgt ein Abnehmen des Deckels (35) von der ersten Trennstufe (1) und ein Herausziehen des Trennelementes (21) aus der ersten Trennstufe (1) heraus. Aufgrund abtropfender verunreinigungen aus dem Trennelement (21) bleibt dieses zunächst in lotrechter Richtung oberhalb der ersten Trennstufe (1) positioniert. In einem nächsten Schritt wird die Aufnahmeeinheit (28) auf die erste Trennstufe (1) aufgesetzt und das verunreinigte Trennelement (21) wird in die Aufnahmeeinheit (28) abgesetzt. Die Aufnahmeeinheit (28) wird anschließend gemeinsam mit dem Trennelement (21) zum Reinigungsplatz transportiert und das Trennelement (21) wird hier in die Reinigungseinheit (29) umgesetzt. Nach einem Abschluß des Reinigungsvorganges wird das gereinigte Trennelement (21) auf der Ablageeinheit (30) abgelegt.

Zur Durchführung einer erneuten Montage wird das Trennelement (21) von der Ablageeinheit (30) zur ersten Trennstufe (1) transportiert und wieder in die erste Trennstufe (1) eingesetzt. Nach einem Aufsetzten des Deckels (35) ist die Betriebsfähigkeit wieder hergestellt. Nach einer gegebenenfalls erfolgenden Säuberung der Reinigungsvorrichtung (27) kann auch diese wieder zusammengesetzt und an ihrem Aufbewahrungsort positioniert werden.

## Patentansprüche

1. Vorrichtung zum Abscheiden von Beimengungen aus Flüssigkeiten, zur Verwendung in einem Trennbehälter zum Abscheiden der Beimengungen aus einem Beimengungs-Flüssigkeits-Gemisch, die eine plattenartige Gestaltung aufweist, **dadurch gekennzeichnet, daß** die plattenartige Gestaltung durch mindestens zwei aufeinander angeordnete Platten (22) ausgebildet ist und daß die Platten (22) von einem stangenartigen Träger (23) gehaltert sind.

2. Vorrichtung nach Anspruch 1, **dadurch gekennzeichnet, daß** im Bereich des Trägers (23) mindestens drei Platten (22) angeordnet sind.

3. Vorrichtung nach Anspruch 1 oder 2, **dadurch gekennzeichnet, daß** mindestens eine der Platten (22) eine makroporöse Struktur aufweist.

4. Vorrichtung nach einem der Ansprüche 1 bis 3, **dadurch gekennzeichnet, daß** die Platten (22) als im wesentlichen kreisförmige Scheiben ausgebildet sind.

5. Vorrichtung nach einem der Ansprüche 1 bis 4, **dadurch gekennzeichnet, daß** der Träger (23) zentrisch im Bereich der Platten (22) angeordnet ist.

6. Vorrichtung nach einem der Ansprüche 1 bis 5, **dadurch gekennzeichnet, daß** der Träger (23) rohrförmig ausgebildet ist.

7. Vorrichtung nach einem der Ansprüche 1 bis 6, **dadurch gekennzeichnet, daß** der Träger (23) mit mindestens einer Handhabungsöffnung (24) versehen ist.

8. Vorrichtung nach einem der Ansprüche 1 bis 7, **dadurch gekennzeichnet, daß** die Platten (22) von mindestens einem Halteblech (25, 26) abgestützt sind, das am Träger (23) befestigt ist.

9. Reinigungsvorrichtung zur Reinigung von plattenförmigen Trennelementen, die im Bereich von Separatoren zum Abscheiden von Beimengungen aus einem Beimengungs-Flüssigkeits-Gemisch vorgesehen sind, **dadurch gekennzeichnet, daß** ein dreiteiliger Aufbau aus einer wannenförmigen Aufnahmeeinheit (28), einer Reinigungseinheit (29) sowie einer deckelartigen Ablageeinheit (30) vorliegt.

10. Reinigungsvorrichtung nach Anspruch 9, **dadurch gekennzeichnet, daß** eine Seitenwandung (32) der deckelförmigen Ablageeinheit (30) einen größeren Innendurchmesser aufweist, als ein Außendurchmesser einer Seitenwandung (31) der wannenförmigen Aufnahmeeinheit (28) beträgt.

11. Reinigungsvorrichtung nach Anspruch 9 oder 10, **dadurch gekennzeichnet, daß** die Reinigungseinheit (29) in der Aufnahmeeinheit (28) anordbar ist.

12. Reinigungsvorrichtung nach einem der Ansprüche 9 bis 11, **dadurch gekennzeichnet, daß** eine in der Aufnahmeeinheit (28) angeordnete Reinigungseinheit (29) von der deckelförmigen Ablageeinheit (30) abdeckbar ist.

13. Reinigungsvorrichtung nach einem der Ansprüche 9 bis 12, **dadurch gekennzeichnet, daß** die Aufnahmeeinheit (28) auf einem Deckel (35) des Separators anordbar ausgebildet ist.
